# EUROPEAN PATENT APPLICATION

(11) **EP 3 686 607 A1**
(43) Date of publication of application: **29.07.2020**
(21) Application number: 19219324.1
(22) Date of filing: 23.12.2019
(51) Int. Cl.: G01P 3/489, G01P 21/02, G01M 1/12, F01D 21/00, G01H 1/00

(54) **SHAFT MONITORING SYSTEM**

(30) Priority: 24.01.2019 GB 201900962
(71) Applicant: Rolls-Royce plc, London N1 9FX (GB)
(72) Inventor: Hill, Ralph, Derby, Derbyshire DE24 8BJ (GB)
(74) Representative: Rolls-Royce plc

(57) **Abstract**

A monitoring system for monitoring behaviour of a rotating shaft is provided. The system includes a phonic wheel which is mounted coaxially to the shaft for rotation therewith, the phonic wheel having a number N of teeth in a circumferential row. The system further includes a first sensor configured to detect the passage of the teeth of the phonic wheel by generating a first alternating measurement signal which includes (i) a primary oscillatory component having a frequency of fN, where f is the rotational frequency of the shaft, and (ii) a secondary oscillatory component of frequency f when the phonic wheel precesses such that during each revolution of the shaft a clearance between the phonic wheel and the first sensor cyclically varies between a maximum value and a minimum value. The system further includes a processor unit configured to determine the durations of successive first speed samples, each first speed sample being a block of integer n successive cycles of the primary oscillatory component of the first alternating measurement signal. The secondary oscillatory component of the first alternating measurement signal, when present, produces a cyclical variation of frequency f in the durations of the successive first speed samples. The processor unit is further configured to detect any such cyclical variation of the first speed samples and to compare a detected cyclical variation of the first speed samples against a threshold variation to determine therefrom if the phonic wheel is precessing. The precession may be caused e.g. by an imbalance due to a blade-off event or a bowing of the shaft.

## Description

### Field of the Disclosure

The present disclosure relates to a shaft monitoring system, and in particular, to a monitoring system for monitoring a rotating shaft of a gas turbine engine.

### Background of the Disclosure

In a gas turbine engine it can be important to monitor for various events so to allow mitigating action to be taken.

One example is a blade off event (particularly a fan blade off event), which must be responded to quickly to prevent further damage to the engine. Typically the required action is to shut down the engine.

Another example is shaft bowing. When a spool (i.e. a given turbine-shaft-compressor combination) has a uniform temperature then the spool is balanced. However, after engine shutdown, uneven heat soak back can bow the shaft of the spool. In particular, such bowing can be a problem for high pressure spools, which are exposed to higher temperatures than intermediate or low pressure spools. Excessive bowing must generally be eliminated in order to safely operate the engine. One option is to power a low speed motor to rotate the spool for several hours after engine shutdown to evenly distribute the soak back heat. Another option is to manage (generally extend) subsequent engine start to ensure that the bow is eliminated before start is completed.

Both these examples have in common that the out of balance produced by the events causes the respective engine shafts to rotate off centre, i.e. to precess.

### Summary of the Disclosure

According to a first aspect there is provided a monitoring system for monitoring behaviour of a rotating shaft, the system including:
a phonic wheel which is mounted coaxially to the shaft for rotation therewith, the phonic wheel having a number N of teeth in a circumferential row;
a first sensor configured to detect the passage of the teeth of the phonic wheel by generating a first alternating measurement signal which includes (i) a primary oscillatory component having a frequency of fN, where f is the rotational frequency of the shaft, and (ii) a secondary oscillatory component of frequency f when the phonic wheel precesses such that each revolution of the shaft a clearance between the phonic wheel and the first sensor cyclically varies between a maximum value and a minimum value; and
a processor unit configured to determine the durations of successive first speed samples, each first speed sample being a block of integer n successive cycles of the primary oscillatory component of the first alternating measurement signal;
wherein the secondary oscillatory component of the first alternating measurement signal, when present, produces a cyclical variation of frequency f in the durations of the successive first speed samples, and the processor unit is further configured to detect any such cyclical variation of the first speed samples and to compare a detected cyclical variation of the first speed samples against a threshold variation to determine therefrom if the phonic wheel is precessing.

Advantageously, adopting this approach for monitoring the rotating shaft allows the system to use electronic circuitry that is typically already available in engine electronic controllers (EECs) for making rotational speed measurements. Thus, barriers to and costs of implementing the system are low.

Optional features of the monitoring system will now be set out. These are applicable singly or in any combination.

The processor unit may be part of an EEC of the engine.

The monitoring system may further have a second sensor configured to detect the passage of the teeth of the phonic wheel by generating a second alternating measurement signal which also includes (i) a primary oscillatory component having a frequency of fN, where f is the rotational frequency of the shaft, and (ii) a secondary oscillatory component of frequency f when the phonic wheel precesses such that each revolution of the shaft a clearance between the phonic wheel and the first sensor cyclically varies between a maximum value and a minimum value;
wherein the processor unit is further configured to determine the durations of successive second speed samples, each second speed sample being a block of integer n successive cycles of the primary oscillatory component of the second alternating measurement signal; and
wherein the secondary oscillatory component of the second alternating measurement signal, when present, produces a cyclical variation of frequency f in the durations of the successive second speed samples, and the processor unit is further configured to detect any such cyclical variation of the second speed samples and to compare a detected cyclical variation of the second speed samples against the threshold variation to determine therefrom if the phonic wheel is precessing.

By monitoring the behaviour based on the durations of the first and second speed samples improvements in measurement accuracy can be achieved. Further, the second sensor provides redundancy in case of failure or malfunction of one sensor. In addition, effects of engine acceleration on shaft speed can be more easily accounted for. Conveniently, the second sensor can be positioned on an opposite side of the first phonic wheel to the first sensor, e.g. so that they are 180° apart.

The processor unit is further configured to issue an engine shutdown command on either (i) loss of the respective alternating measurement signals from both of the sensors, or (ii) loss of the respective alternating measurement signal from one of the sensors, and a determination that the phonic wheel is precessing based on the respective alternating measurement signal from the other one of the sensors. Options (i) and (ii) are both robust indicators of an engine problem requiring shutdown.

The value of N/n can be four or more.

The phonic wheel may be configured such that the, or each, sensor also provides a once per revolution signal. For example, one tooth of the phonic wheel may be longer or shorter than the other teeth. Such a once per revolution signal may be used by the processor unit configured to filter the speed samples for noise and/or transient disturbances.

According to a second aspect there is provided gas turbine engine for an aircraft, the gas turbine engine comprising:
an engine core comprising a turbine, a compressor and a core shaft connecting the turbine to the compressor; and
a monitoring system according to the first aspect for monitoring behaviour of the core shaft, the phonic wheel being mounted coaxially to the core shaft for rotation therewith.

For example, the monitoring system may monitor for bowing of the core shaft, the bowing causing the phonic wheel to precess. As another example, the monitoring system may monitor for a blade off event from the core shaft, the blade off event causing the phonic wheel to precess.

According to a third aspect there is provided gas turbine engine for an aircraft, the gas turbine comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan via an output shaft so as to drive the fan at a lower rotational speed than the core shaft; and
a monitoring system according to any one of claims 1 to 4 for monitoring behaviour of the output shaft, the phonic wheel being mounted coaxially to the output shaft for rotation therewith.

For example, the monitoring system may monitor for a fan blade off event from the fan, the blade off event causing the phonic wheel to precess.

In the gas turbine engine of the second or third aspect the turbine may be a first turbine, the compressor may be a first compressor, and the core shaft may be a first core shaft. The engine core may then further comprise a second turbine, a second compressor, and a second core shaft connecting the second turbine to the second compressor. The second turbine, second compressor, and second core shaft can be arranged to rotate at a higher or lower rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of:0.28, 0.29, 0.3, 0.31, 0.32, 0.33, 0.34, 0.35, 0.36, 0.37, 0.38, 0.39 or 0.4 (all units in this paragraph being Jkg⁻¹K¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24, or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** shows schematically a speed measurement system which can also be used to monitor for blade off and shaft bow events;
**Figure 5** shows schematically an alternating measurement signal detected by a speed sensor, the signal having a sinusoidal wave pattern as its primary oscillatory component;
**Figure 6** shows schematically a precessional orbit of a phonic wheel of the monitoring system relative to a clearance limit at successive locations on the orbit during a single rotation of the phonic wheel;
**Figure 7** shows schematically at top a reference alternating measurement signal for normal rotation and at bottom the actual alternating measurement signal at location A from Figure 6;
**Figure 8** shows schematically at top the reference alternating measurement signal and at bottom the actual alternating measurement signal at location B from Figure 6;
**Figure 9** shows schematically at top the reference alternating measurement signal and at bottom the actual alternating measurement signal at location C from Figure 6;
**Figure 10** shows schematically at top the actual analog passing speed of the phonic wheel over a speed sensor for a single rotation of the wheel, and at bottom the corresponding measured digital passing speed;
**Figure 11** shows schematically the respective analog passing speeds of the phonic wheel over two 180° apart speed sensors;
**Figure 12** shows schematically the respective analog passing speeds of the phonic wheel over two 135° apart speed sensors;
**Figure 13** shows schematically part of an engine structure having a phonic wheel and speed sensors for blade off monitoring; and
**Figure 14** shows schematically part of an alternative engine structure having a phonic wheel and speed sensors for blade off monitoring.

### Detailed Description

Aspects and embodiments of the present disclosure will now be discussed with reference to the accompanying figures. Further aspects and embodiments will be apparent to those skilled in the art.

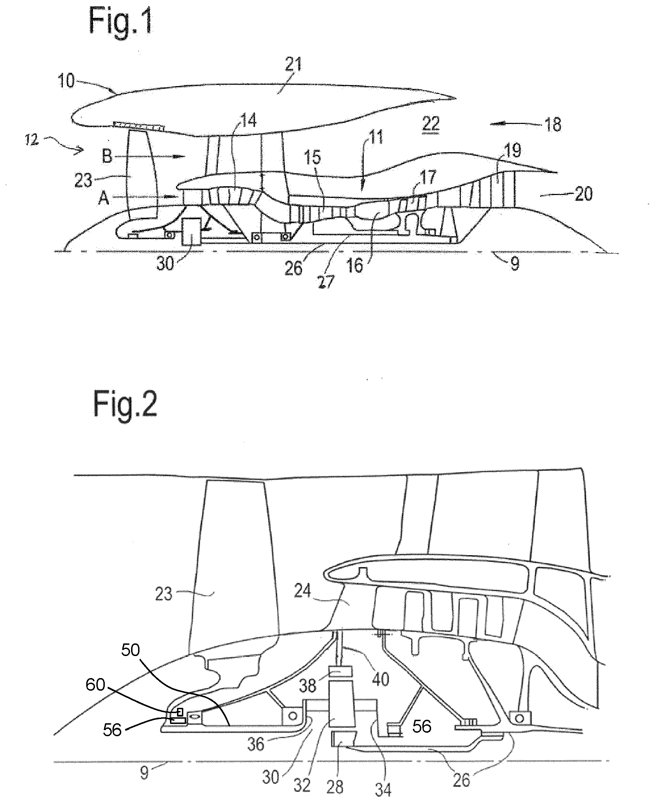

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2**. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

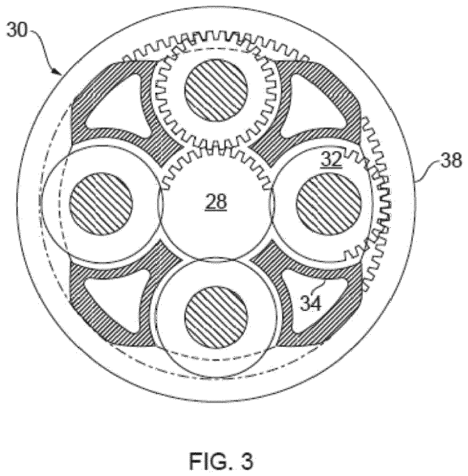

The epicyclic gearbox 30 is shown by way of example in greater detail in **Figure 3**. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In the exemplary arrangement for a geared fan gas turbine engine 10 shown in Figure 2, an output shaft 50 from the epicyclic gear arrangement 30 transmits torque to the fan 23. A phonic wheel 56 has a circumferential row of teeth whose passage is detected by a first variable reluctance speed sensor 60 mounted to a stationary structure of the engine. The phonic wheel and speed sensor are used to measure the rotational speed of the output shaft, and hence of the fan, the measurement being used for control and monitoring purposes by the engine's EEC.

### Speed Measurement

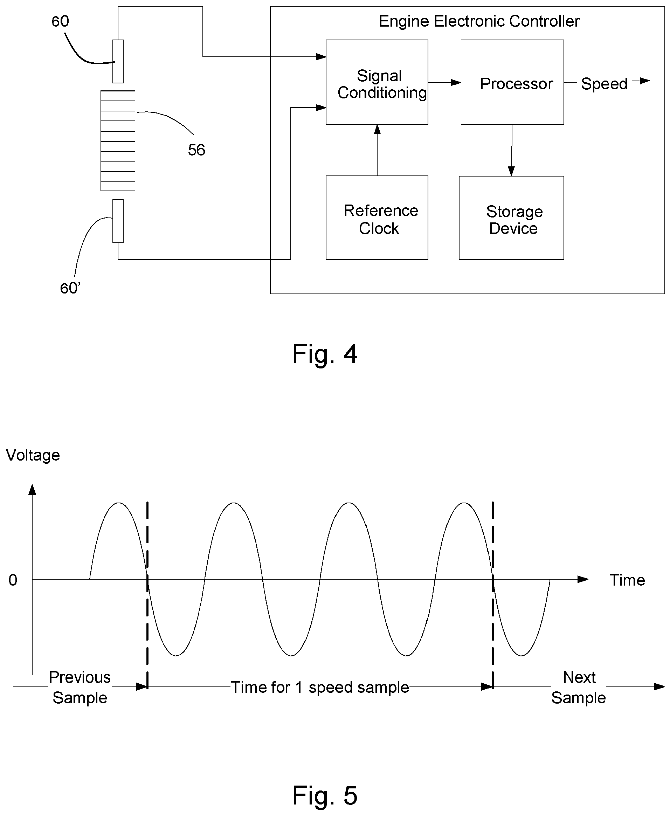

A speed measurement system using the phonic wheel 56 and the first speed sensor 60 is shown schematically in **Figure 4****.** Although not shown in Figure 2, the system may have a second variable reluctance speed sensor 60' positioned on the opposite side of the first phonic wheel 56. The phonic wheel has a number N of regularly spaced teeth. These are typically square edged and of uniform circumferential thickness, such that the rotation of the phonic wheel past each sensor induces a respective alternating measurement signal having a sinusoidal wave pattern (primary oscillatory component), as shown in **Figure 5****.** The speed measurement system (typically embodied as part of the EEC) has a signal conditioning function which detects zero crossings and uses a reference clock to measure the time for a speed sample of n successive complete cycles (the beginning of each cycle being a zero-crossing point from the previous cycle and the end of each cycle being the corresponding zero-crossing point to the next cycle). A processor of the EEC then uses this timing information to derive the rotational speed of the output shaft 50 and fan 23. In Figure 5 each speed sample is shown made up of n = 3 successive cycles. The two sensors 60, 60' provide redundancy, and improve measurement accuracy.

### Blade Off Detection

A fan blade off (FBO) event from the fan 23 produces an out of balance (OOB) in which the output shaft 50 precesses. If the precession is large enough, it can lead to the loss of both of the speed sensors 60, 60', which of itself is a robust indicator to the EEC that there is a problem and engine shutdown can be initiated. Particularly, if the fan blades are composite rather than metal, blade failures tend to be partial (i.e. loss of only a top section of the blade) rather than total. Such partial loss of a fan blade can produce a precession that does not lead to loss of the speed sensors. However, in this case, as explained below, characteristic changes in the speed measurements taken by the phonic wheel 56 and the speed sensors 60, 60' can be used by the EEC to detect the precession and hence the FBO event.

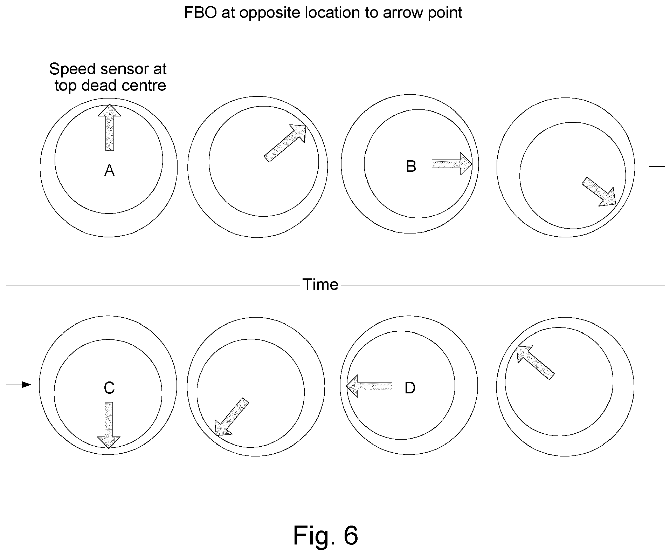

On loss of a fan blade, the loss of balance in the fan assembly forces the phonic wheel 56 into an OOB precessional orbit as illustrated in **Figure 6****,** in addition to the fan rotation speed. The frequency of orbit is once per revolution of the fan. The outer circle represents the clearance limit for which a higher OOB will lead to elimination of the speed sensors 60, 60' by impact with the phonic wheel. The phonic wheel is rotating in a clockwise direction in Figure 6.

The time between each phonic wheel tooth passing a given speed sensor is a combined response of fan rotational speed and a secondary oscillatory component due to the precessional orbit which is a simple harmonic component on the relative time of zero crossings. In addition, the amplitude of the signal changes dependent on proximity to the sensor.

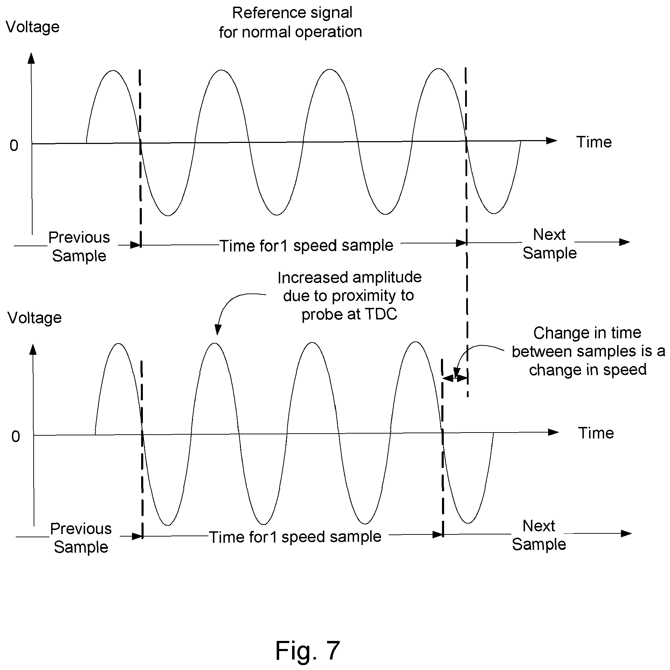

This is illustrated in Figures 7, 8 and 9 to reflect speed signal changes for phonic wheel positions A, B and C on Figure 6 with the sensor 60 at top dead centre (TDC). For each figure, the nominal signal (i.e. without FBO) is provided to illustrate the change.

With reference to **Figure 7****,** the effect of the OOB when the phonic wheel 56 is at location A is that the phonic wheel is closer to the sensor 60 such that the amplitude of the signal is increased. However, the phonic wheel is also at peak relative speed to the right due to the OOB component, so the measured speed is higher than the actual rotational speed. Thus, in Figure 7 the additional motion reduces the time for the teeth to pass the sensor.

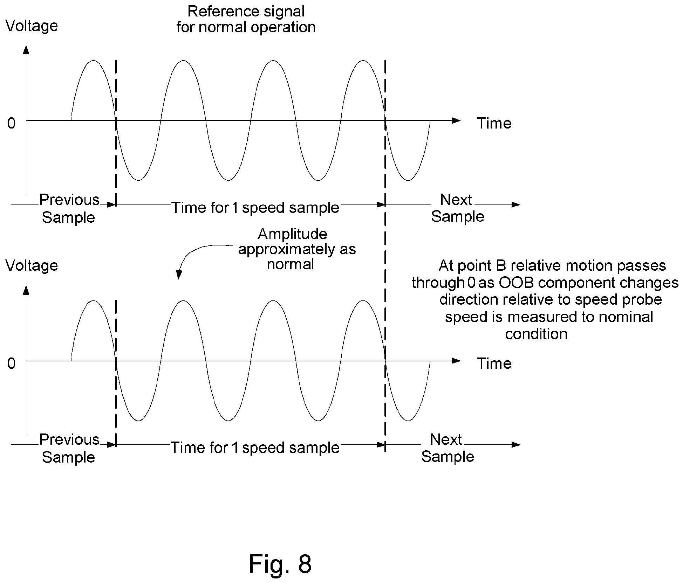

With reference to **Figure 8****,** the effect of the OOB at Location B is that the relative motion between the phonic wheel 56 and sensor 60 transitions through zero. Thus, the measured speed matches the nominal signal.

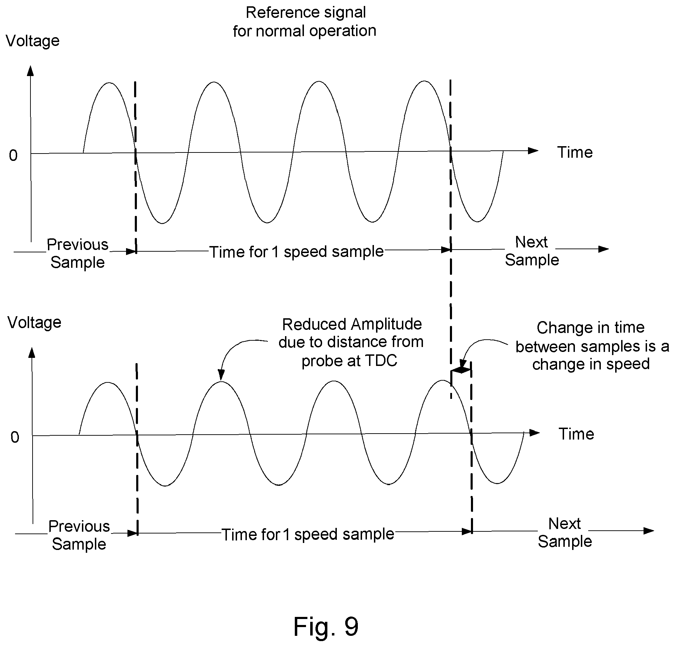

With reference to **Figure 9****,** the effect on the sensor 60 when the OOB moves the phonic wheel 56 through location C is that the relative motion of the phonic wheel teeth to the sensor is to the left, which appears as a reduced rotational speed relative to the nominal signal.

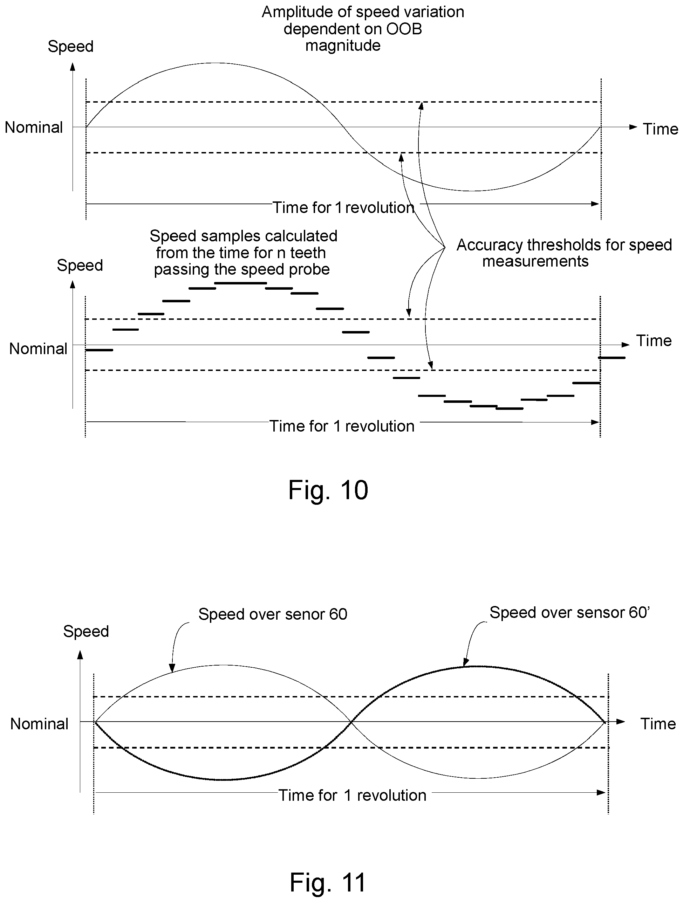

The net effect of the change in time for each phonic wheel tooth against the nominal time at a steady state rotational speed measurement is illustrated in the top half of **Figure 10** as a continuous line. The actual variation is digitised into N cycles and over one rotation is split into N/n speed samples. As long as the measured speed signal varies at a level greater than a threshold limit determined by the measurement system accuracy, the precessional behaviour around the actual (nominal) speed can be identified, as shown in the lower half of Figure 10.

Figures 7 to 10 illustrate the approach of the system to monitoring for blade off at steady state conditions. Thus, for a single sensor 60, the speed samples from a previous cycle's rotation can be used as a reference for the average speed such that, if the measured speed signal from a sample differs from the average by greater than measurement accuracy limits with a phasing that matches the time of one rotation. However, the system can also monitor for blade off events in transient conditions by taking account of rate of change on the moving average.

The monitoring can be made more robust by the use of the two diametrically opposed sensors 60, 60'. In this case, as well as each sensor providing the measurement characteristics discussed above, the phase oscillation between the two sets of measurements provides another indication of a failure event. Specifically, the opposing speed measurement from the second sensor 60' is 180° out of phase with that from the first sensor 60. This is illustrated in **Figure 11****.** The two sets of measurements periodically match and diverge twice per revolution.

Monitoring of the phase oscillation between the two sensors 60, 60' can be performed continuously, i.e. it does not need to be triggered by other events such as a measured speed signal from one of the sensors varying at a level greater than the threshold limit. Such continuous monitoring of OOB helps to reduce any confirmation period required by the EEC.

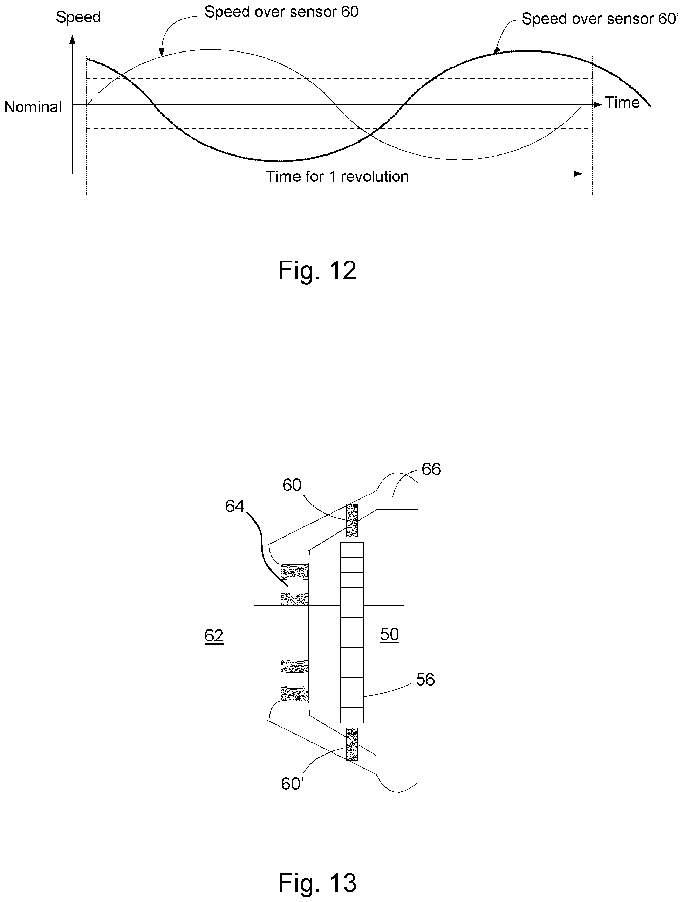

Although locating the second sensor 60' diametrically opposite the first sensor 60' is convenient, other angular positions between the sensor locations can be accommodated. For example, **Figure 12** shows two sets of measurements from the speed sensors 60, 60' at 135° separation.

Advantageously, having two sensors 60, 60' allows the monitoring system to rely on the relative phasing between the two sets of measurements, thereby removing effects of engine acceleration.

It is possible for the initial precession on FBO to impact just one sensor and then for the OOB to reduce without impacting the remaining sensor. In this case, loss of one of the sensors 60, 60' and detection of phase oscillation on the remaining sensor within a time window can also be used as a robust indication to the EEC that there is a problem.

In support of blade off detection, the number n of successive complete cycles is preferably selected so that each shaft rotation has at least four complete speed samples. Increasing the sample rate (i.e. by reducing n and/or increasing N), even to the limit of setting n = 1, can improve the sensitivity of the monitoring.

Following a blade off event, the torque characteristic between the fan and the driving turbine changes due to the reduction in the fan drag. This leads to a torsional oscillation component as the shaft untwists, resulting in damped oscillation on the rotation until the shaft twist reaches a new equilibrium. Effectively, the shaft acts as a spring with a resonant frequency and a stiffness factor. However, this effect is secondary relative to the OOB variation on shaft speed.

The monitoring system can include a confirmation time to allow for transient disturbances on speed samples (e.g. caused by ice shedding or lightning strike). Additionally, or alternatively the system can filter noise effects on the speed samples for comparison between signals from other sensors. If the phonic wheel 56 also provides a once per revolution signal (e.g. by having one tooth which is shorter or longer than the other teeth), then this can be used to help determine when noise signals or transient disturbances have caused an additional reading.

In a variant system, the monitoring system includes a further phonic wheel with respective sensor(s) at the other end of the shaft. Depending on the rigidity of the shaft, a corresponding absence of speed signal variation can occur, or a similar precessional coupling to the fan rotation can occur, potentially with a phase difference related to the torsional stiffness of the shaft. This further information can be used to confirm the blade off event detected by the first phonic wheel and its sensors.

In the above discussion, the sensors 60, 60' are assumed to be statically located on a rigid engine structure that does not move as the shaft precesses. However, if the structure to which the sensors are mounted is not isolated from the FBO OOB, then the movement of the sensors also has to be accounted for. This movement also has once per revolution component which can expect to be reduced relative to the phonic wheel if the sensor installation is also linked to additional structure.

As an example, **Figure 13** shows a hub 62 for the fan 23 attached to the end of the output shaft 50, which is in turn located in the engine by bearings 64. The phonic wheel 56 is mounted to the shaft on the opposite side of the bearings as the fan hub, and the speed sensors 60, 60' are mounted to a relatively rigid portion of engine structure 66 which also carries the bearings. Following an FBO event the shaft rotates with an OOB component moving the bearings 64 and the engine structure 66, but the structure progressively damps the OOB force such that at the phonic wheel position there is reduced forced movement and there is significant relative motion between the phonic wheel and the speed sensors. Nonetheless, the effect of the forced movement at the speed sensor location is to effectively increase the threshold OOB which can be detected.

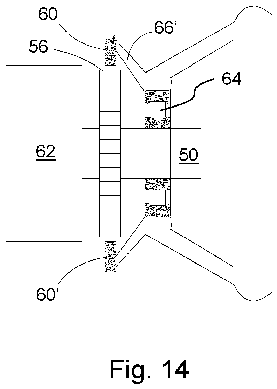

In contrast, **Figure 14** shows the phonic wheel 56 mounted to the shaft 50 on the same side of the bearings 64 as the fan hub 62, and the speed sensors 60, 60' mounted to a significantly less rigid portion of engine structure 66'. In this configuration, the sensors may move with approximately the same magnitude of OOB as the phonic wheel, yielding little or no relative motion that can be detected by the monitoring system.

Although discussed above in relation to an FBO event, such a system can also be used to monitor for a compressor blade off event.

The EEC can store the relative time for tooth passing during normal (non-OOB) rotations of the phonic wheel 56, and use the stored relative time to filter apparent noise on OOB measurements. This filtering can be further enhanced if the phonic wheel 56 also provides a once per revolution signal (discussed above) as EEC can then determine which teeth are contributing to any given speed sample. In this way, the EEC can better accommodate phonic wheel machining tolerances or revised tooth profiles.

### Shaft Bow

The monitoring system for shaft bow is similarly configured to that for monitoring for blade off events (i.e. an adapted speed measurement system), but is typically installed on the shaft 27 of the high pressure spool.

In the case of monitoring for shaft now, the shaft rotation speed is generally much lower (typically just a few hundred rpm at the point in the start of interest compared to typically over 1000 rpm for FBO monitoring). Additionally the amount of OOB is much lower (typically up to 0.05 mm for shaft bow monitoring compared to typically about 0.2 mm for FBO monitoring). These factors make it more difficult to detect shaft bow without increasing the resolution of the clock cycle for zero crossing detection. Nonetheless, a monitoring system to detect the presence of shaft bow is possible.

The measure of OOB can then be used to regulate engine start. In particular, knowing the amount of OOB allows resonant frequencies of the spool to be avoided, e.g. by limiting the air supply and hence engine cranking speed. As the OOB reduces the engine speed can be increased. While the start sequence is still extended, the active monitoring of shaft bow allows the start to be optimised, and typically reduced in overall time.

It will be understood that the invention is not limited to the embodiments above-described and various modifications and improvements can be made without departing from the concepts described herein within the scope of the following claims. Except where mutually exclusive, any of the features may be employed separately or in combination with any other features and the disclosure extends to and includes all combinations and sub-combinations of one or more features described herein.

## Claims

1. A monitoring system for monitoring behaviour of a rotating shaft (27, 50), the system including:
a phonic wheel (56) which is mounted coaxially to the shaft (27, 50) for rotation therewith, the phonic wheel having a number N of teeth in a circumferential row;
a first sensor (60) configured to detect the passage of the teeth of the phonic wheel (56) by generating a first alternating measurement signal which includes (i) a primary oscillatory component having a frequency of fN, where f is the rotational frequency of the shaft, and (ii) a secondary oscillatory component of frequency f when the phonic wheel precesses such that each revolution of the shaft a clearance between the phonic wheel and the first sensor cyclically varies between a maximum value and a minimum value; and
a processor unit configured to determine the durations of successive first speed samples, each first speed sample being a block of integer n successive cycles of the primary oscillatory component of the first alternating measurement signal;
wherein the secondary oscillatory component of the first alternating measurement signal, when present, produces a cyclical variation of frequency f in the durations of the successive first speed samples, and the processor unit is further configured to detect any such cyclical variation of the first speed samples and to compare a detected cyclical variation of the first speed samples against a threshold variation to determine therefrom if the phonic wheel is precessing.

2. The monitoring system of claim 1, further having a second sensor (60') configured to detect the passage of the teeth of the phonic wheel (56) by generating a second alternating measurement signal which also includes (i) a primary oscillatory component having a frequency of fN, where f is the rotational frequency of the shaft, and (ii) a secondary oscillatory component of frequency f when the phonic wheel precesses such that each revolution of the shaft a clearance between the phonic wheel and the first sensor cyclically varies between a maximum value and a minimum value;
wherein the processor unit is further configured to determine the durations of successive second speed samples, each second speed sample being a block of integer n successive cycles of the primary oscillatory component of the second alternating measurement signal; and
wherein the secondary oscillatory component of the second alternating measurement signal, when present, produces a cyclical variation of frequency f in the durations of the successive second speed samples, and the processor unit is further configured to detect any such cyclical variation of the second speed samples and to compare a detected cyclical variation of the second speed samples against the threshold variation to determine therefrom if the phonic wheel is precessing.

3. The monitoring system of claim 2, wherein the second sensor (60') is positioned on an opposite side of the phonic wheel (56) to the first sensor (60).

4. The monitoring system of claim 2 or 3, wherein the processor unit is further configured to issue an engine shutdown command on either (i) loss of the respective alternating measurement signals from both of the sensors (60, 60'), or (ii) loss of the respective alternating measurement signal from one of the sensors, and a determination that the phonic wheel is precessing based on the respective alternating measurement signal from the other one of the sensors.

5. The monitoring system of any previous claim, wherein N/n is four or more.

6. The monitoring system of any previous claim, wherein the phonic wheel (56) is configured such that the, or each, sensor (60, 60') also provides a once per revolution signal.

7. A gas turbine engine (10) for an aircraft, the gas turbine engine comprising:
an engine core (11) comprising a turbine (17, 19), a compressor (15, 14) and a core shaft (26, 27) connecting the turbine to the compressor; and
a monitoring system according to any one of the previous claims for monitoring behaviour of the core shaft (26, 27), the phonic wheel (56) being mounted coaxially to the core shaft for rotation therewith.

8. The gas turbine engine of claim 7, wherein the monitoring system monitors for bowing of the core shaft (27), the bowing causing the phonic wheel (56) to precess.

9. The gas turbine engine of claim 7, wherein the monitoring system monitors for a blade off event from the core shaft (26, 27), the blade off event causing the phonic wheel (56) to precess.

10. A gas turbine engine (10) for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan via an output shaft (50) so as to drive the fan (23) at a lower rotational speed than the core shaft (26); and
a monitoring system according to any one of claims 1 to 5 for monitoring behaviour of the output shaft (50), the phonic wheel (56) being mounted coaxially to the output shaft for rotation therewith.

11. The gas turbine engine of claim 10, wherein the monitoring system monitors for a fan blade off event from the fan (23), the blade off event causing the phonic wheel (56) to precess.
